# EUROPÄISCHE PATENTSCHRIFT

(11) **EP 1 031 712 B1**
(45) Veröffentlichungstag und Bekanntmachung des Hinweises auf die Patenterteilung: **27.04.2005**
(21) Anmeldenummer: 00103239.0
(22) Anmeldetag: 17.02.2000
(51) Int. Cl.: F02B 29/02

(54) **Vorrichtung zur Impulsaufladung einer Kolbenbrennkraftmaschine**
Means for impulse charging a piston engine
Dispositif d'alimentation par impulsions pour moteur à piston

(30) Priorität: 26.02.1999 DE 19908435
(43) Veröffentlichungstag der Anmeldung: 30.08.2000
(73) Patentinhaber: META MOTOREN- UND ENERGIE-TECHNIK GMBH, D-52134 Herzogenrath (DE)
(72) Erfinder: Kreuter, Peter Dr.-Ing., 52072 Aachen (DE)
(74) Vertreter: Kramer - Barske - Schmidtchen

(56) Entgegenhaltungen:
- DE-A- 3 741 880
- US-A- 5 033 419
- US-A- 5 245 956
- US-A- 5 351 660
- US-A- 5 390 633
- PATENT ABSTRACTS OF JAPAN vol. 007, no. 287 (M-264), 21. Dezember 1983 (1983-12-21) & JP 58 160512 A (HONDA GIKEN KOGYO KK), 24. September 1983 (1983-09-24)
- PATENT ABSTRACTS OF JAPAN vol. 016, no. 541 (M-1336), 11. November 1992 (1992-11-11) & JP 04 203212 A (TOYOTA MOTOR CORP), 23. Juli 1992 (1992-07-23)

## Beschreibung

Die Erfindung betrifft eine Vorrichtung zur Impulsaufladung einer Kolbenbrennkraftmaschine.

Ein wesentlicher Grund für die Aufladung von Brennkraftmaschinen ist, daß eine vorgegebene Leistung oder ein vorgegebenes Drehmoment mit einer kleineren Maschine erzeugt werden kann, was Gewichts-, Bauraum- und Verbrauchsvorteile mit sich bringt. Ein weiterer Vorteil liegt darin, daß die Aufladung einen zusätzlichen Parameter zur Beeinflussung der Ladungsaufbereitung und des Verbrennungsablaufes bildet, wodurch der thermodynamische Verbrennungswirkungsgrad und/oder der Schadstoffgehalt im Abgas vorteilhaft beeinflußt werden kann.

In die Praxis eingeführt wurden bisher die Abgasturboaufladung und die Aufladung mittels mechanischer, von der Kurbelwelle angetriebener Lader. Immer wieder versucht wurde die sogenannte Impulsaufladung, bei der der Einlaßkanal mittels eines Bauteils stromoberhalb des Einlaßventils zeitweilig verschlossen wird, so daß sich beim Ansaughub des Kolbens und offenem Einlaßventil stromab des Bauteils Unterdruck einstellt. Wenn das Bauteil bei vorhandenem Unterdruck in seine Öffnungsstellung bewegt wird, beschleunigt der Unterdruck die freigegebene Ladungssäule, die mit hohem Impuls in den Brennraum einströmt und dort eine größere Füllung bewirkt. Als Bauteile, mit denen der Einlaßkanal zeitweilig verschlossen wird, wurden bisher Walzendrehschieber, linear bewegliche Schieber, und ähnliches verwendet, die allesamt zu ihrem Antrieb auf Fremdkraft angewiesen sind und ein verhältnismäßig langes Zeitfenster für die vollständige Öffnung des Einlaßkanals benötigen, was dem Wirkungsgrad der Impulsaufladung nachteilig beeinflußt.

Aus der JP 58160512 A, von der in den Oberbegriffen der beigefügten unabhängigen Patentansprüche ausgegangen wird, ist ein strömungsoberhalb eines Ladungswechselventils angeordnetes Bauteil als eine Blattfeder ausgebildet, die einseitig an einer Innenseite des Ladungswechselkanals eingespannt ist und in ihrer Schließstellung mit ihrem dem eingespannten Rand gegenüberliegenden Rand an der Polfläche eines Elektromagneten anliegt, der die Blattfeder in Schließstellung hält.

Eine Eigenart der bekannten Vorrichtung liegt darin, dass eine einwandfreie Abdichtung der Blattfeder längs ihres gesamten Umfangs nur bei in sich verhältnismäßig steifer Ausbildung der Blattfeder gewährleistet ist, wodurch die nach Abschalten des Elektromagneten die Blattfeder in eine Öffnungsstellung verbiegenden Kräfte verhältnismäßig groß sein müssen und der freigegebene Querschnitt begrenzt ist.

Der Erfindung liegt die Aufgabe zugrunde, eine gattungsgemäße Vorrichtung dahingehend weiterzubilden, dass eine möglichst effiziente Impulsaufladung möglich wird.

Diese Aufgabe wird mit den Merkmalen des Anspruchs 1 gelöst.

Bei der erfindungsgemäßen Vorrichtung ist durch die Ausbildung des Elektromagneten als Portalmagnet und die Ausbildung des beweglichen Bauteils als Klappe aus Weicheisen gewährleistet, dass bei aktiviertem Elektromagneten der Strömungsquerschnitt des Ladungswechselkanals zuverlässig abgedichtet ist, wodurch sich bei geöffnetem Ladungswechselventil und ansaugendem Kolben strömungs- abwärts der in Schließstellung befindlichen Klappe ein hoher Unterdruck aufbaut, der beim plötzlichen Öffnen der Klappe nach Deaktivieren des Elektromagneten zu einer wirksamen Impulsaufladung führt.

Mit den Merkmalen des Anspruchs 2 wird die Abdichtsicherheit verbessert.

Der Anspruch 3 ist auf eine vorteilhafte Grundkonstruktion der Anlenkung der Klappe am Ladungswechselkanal gerichtet.

Mit den Merkmalen des Anspruchs 4 wird erreicht, dass die Klappe in ihrer Öffnungsstellung den durch den Durchströmquerschnitt des Portalmagneten gegebenen Durchströmquerschnitt des Ladungswechselkanals vollständig freigibt, wobei zusätzlich die Bewegung der Klappe in ihre Öffnungsstellung durch zweckentsprechende Erregung des Fangmagneten beschleunigt wird.

Mit den Merkmalen des Anspruchs 5 wird die Masse der einzelnen Klappen vermindert, wodurch die Öffnungs- und Schließzeiten günstig beeinflusst werden.

Mit den Merkmalen des Anspruchs 6 wird der Durchströmquerschnitt vermindert.

Mit den Merkmalen des Anspruchs 7 werden die Strömungsverhältnisse günstig beeinflusst.

Mit den Merkmalen des Anspruchs 8 werden die Öffnungs- und Schließzeiten zusätzlich vermindert.

Mit den Merkmalen des Anspruchs 9 wird das akustische Verhalten und die Dauerhaltbarkeit der erfindungsgemäßen Vorrichtung günstig beeinflusst.

Der Anspruch 10 kennzeichnet eine vorteilhafte Anwendung der erfindungsgemäßen Vorrichtung.

Die Erfindung eignet sich sowohl für Einlaßkanäle als auch für Auslaßkanäle von Kolbenbrennkraftmaschinen, die als Otto-Motoren oder Diesel-Motoren ausgebildet sein können und in Zweitakt- oder Viertaktverfahren oder sonstwie arbeiten. Die Gemischaufbereitung kann durch Saugrohreinspritzung, Direkteinspritzung oder sonstwie erfolgen.

Die Erfindung wird im folgenden anhand schematischer Zeichnungen beispielsweise und mit weiteren Einzelheiten erläutert.

Es stellen dar:
- Fig. 1: eine schematische Ansicht eines Zylinders einer Hubkolbenbrennkraftmaschine mit einigen Bauteilen des Einlaßsystems und
- Fig. 2: einen Längsschnitt durch einen Teil eines Schwingrohres,
- Fig. 3: funktionswesentliche Teile der Fig. 2 in ähnlicher Ansicht und etwas abgeänderte Ausführungsform und
- Fig. 4: eine Aufsicht auf ein Ansaugbauteil.

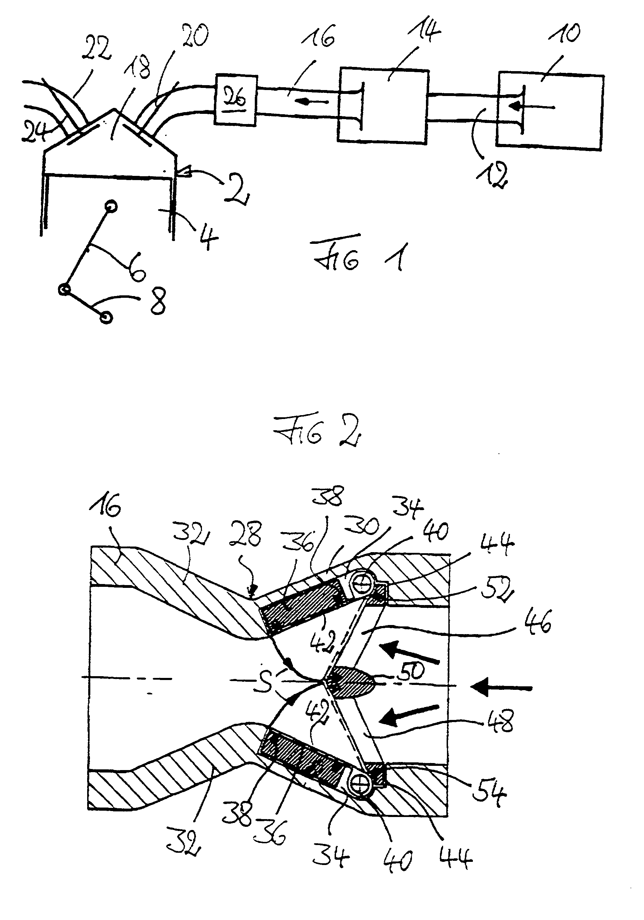

Gemäß Fig. 1 weist eine Hubkolbenbrennkraftmaschine mehrere Zylinder 2 auf, in denen je ein Kolben 4 arbeitet, der über ein Pleuel 6 mit einer Kurbelwelle 8 verbunden ist.

Die Frischluftzufuhr zu dem Zylinder 2 erfolgt durch ein Luftfilter 10 hindurch, das über eine Anschlußleitung 12 mit einem Luftsammler 14 verbunden ist, von dem aus einzelne Schwingrohre 16 in den Brennraum 18 der Zylinder 2 führen. In der Mündung des Schwingrohrs 16 in den Brennraum 18 ist ein Einlaßventil 20 angeordnet. In der Öffnung des Brennraums 18 in einen Auslaßkanal 22 hinein ist ein Auslaßventil 24 angeordnet.

Die Wirkungsweisen solcher Brennkraftmaschinen einschließlich der Gemischaufbereitung usw. ist an sich bekannt und wird daher nicht im einzelnen erläutert. Bei der dargestellten Ausführungsform des Einlaßsystems ist die Länge der Schwingrohre 16 gezielt auf einen bestimmten Drehzahlbereich abgestimmt, in dem eine besonders gute Füllung erzielt wird. Die Länge der Schwingrohre 16 kann durch geeignete Saugrohrgestaltung veränderbar oder umschaltbar sein.

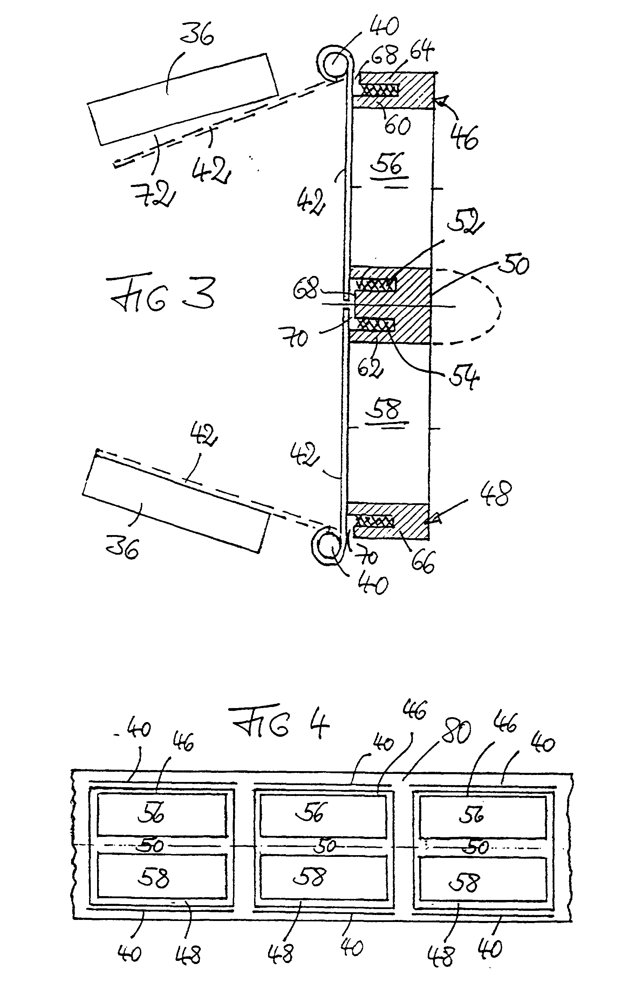

Erfindungsgemäß ist das Schwingrohr 16 mit einer insgesamt mit 26 bezeichneten Vorrichtung zur Impulsaufladung versehen, die anhand Fig. 2 genauer beschrieben wird.

Gemäß Fig. 2 ist das Schwingrohr 16 mit einer lavaldüsenartigen Verengung 28 ausgebildet, so daß sich der Durchströmungsquerschnitt des Schwingrohrs in einem Bereich 30 verengt und in einem Bereich 32 erweitert. Nach Art der Lavaldüse ist der Durchströmungsquerschnitt stromab der Verengung 28 größer als stromoberhalb der Verengung.

Die Innenseite der Wand des Schwingrohrs 16 ist in dem sich verengenden Bereich 60 mit sich diametral gegenüberliegenden Ausnehmungen 34 ausgebildet, in denen Magnetkerne 36 mit jeweils einer Spule 38 aufgenommen sind.

Weiter ist in jeder der Ausnehmungen 34 in sich diametral gegenüberliegender Weise am stromaufwärtigen Ende der Ausnehmung 34 ein Lagerzapfen 40 angebracht, an dem eine Klappe 42 gelagert ist.

Unmittelbar stromoberhalb der Lagerzapfen 40 sind in entsprechende Aussparungen 44 der Ausnehmungen 34 Rahmenteile 46 und 48 eingesetzt, deren äußere Schenkel in der Wandung des Schwingrohrs 16 aufgenommen sind und deren innere Schenkel in einem Steg 50 zusammenlaufen, der das Schwingrohr durchquert und mit stromlinienartigen Profil ausgebildet ist, so daß er für eine gemäß Fig. 2 von rechts nach links erfolgende Einlaßströmung einen geringen Widerstand bietet.

In jedes der Rahmenteile 46 und 48, die vorteilhafterweise aus weichmagnetischem Werkstoff bestehen, ist eine Magnetspule 52 bzw. 54 integriert, so daß insgesamt zwei Portalmagnete gebildet sind, die den Strömungsquerschnitt des Schwingrohrs 16 bzw. des Einlaßkanals bilden.

Die Klappen sind als dünne Weicheisenbleche ausgebildet, die in sich derart verformbar sind, daß sie im Schließzustand (gestrichelt eingezeichnet) in dichtender Anlage an den durch die Rahmenteile 46 und 48 gebildeten Polflächen der Magnetspulen 52 und 54 anliegen. Dadurch werden große Haltekräfte erzeugt und wird der Raum gemäß Fig. 2 links von den Klappen 42 zuverlässig gegenüber dem Raum rechts der Klappen abgedichtet.

Die Klappen 42 werden von nicht dargestellten Torsionsfedern oder Schließfedern in die Schließstellung vorgespannt, die sich jeweils an der Wand des Saugrohrs und einer Klappe abstützen und beispielsweise den Lagerzapfen umfassen.

Die Funktion der beschriebenen Anordnung ist wie folgt:

Es sei angenommen, das Einlaßventil 20 ist zu und im Schwingrohr 16 ist keine Strömung in Richtung des Einlaßventils 20 vorhanden. Die Klappen 42 werden dann von den nicht dargestellten Schließfedern in Anlage an die Portalmagnete 46, 52 bzw. 48, 54 gedrängt und bei deren Strombeaufschlagung in dichtender Anlage gehalten, wobei die Klappen unmittelbar als Magnetanker wirken.

Wenn bei einem Saughub nun das Einlaßventil 20 geöffnet wird, entsteht in dem Bereich des Schwingrohrs 16 stromab der geschlossenen Klappen ein zunehmender Unterdruck. Je nach erwünschter Aufladung oder sonstigen erwünschten thermodynamischen Parametern wird der Strom durch die Magnetspulen 52 und 54 abgeschaltet, so daß die Klappen 42 sich infolge des an ihnen angreifenden Unterdrucks und von der einsetzenden Einströmung mitgenommen schlagartig in Öffnungsrichtung bewegen. Dabei werden die weichmagnetischen Klappen von dem Magnetfeld der inzwischen strombeaufschlagten Öffnungsspulen 38 erfaßt und in Anlage an die Magnetkerne 36 gezogen, so daß die Klappen zuverlässig geöffnet bleiben und keinerlei Strömungshindernis der Einströmung bilden. Die Einströmung wird infolge des sich abbauenden Unterdrucks stark beschleunigt und bewirkt infolge des hohen Impulses eine Aufladung im Brennraum 18. Wird das Einlaßventil 20 dann für den Kompressionshub geschlossen, so wird die Strombeaufschlagung der Öffnungsspulen 38 beendet und die Klappen 42 bewegen sich unter dem Einfluß der Schließfedern unter Verschwenken in Richtung der Pfeile s in Schließrichtung, so daß der Zyklus erneut beginnen kann.

Wenn keine Aufladung erwünscht ist, werden die Klappen vorteilhafterweise dauerhaft von den strombeaufschlagten Öffnungsspulen 38 in Öffnungsstellung gehalten, so daß sie keinerlei Strömungswiderstand bilden. Alternativ können die Öffnungsspulen auch ohne Strombeaufschlagung bleiben, so daß die Klappen eine Rückströmung verhindern und sich infolge der Einströmung jeweils in die Öffnungsstellung bewegen.

Aus Gründen einer geringen Bewegungsamplitude der Klappen ist es günstig, die Klappen in Richtung der Lagerzapfen 40 deutlich größer auszubilden als in ihrer in Fig. 2 sichtbaren Erstreckung quer zu den Lagerzapfen. Die Rahmenteile 46 und 48 bilden dann, gesehen gemäß Fig. 2 von rechts, eine Brille, die relativ flach und breit ist.

Das elektronische Steuergerät zur Ansteuerung und Strombeaufschlagung der Magnetspulen sowie die dafür erforderlichen Sensorik ist nicht dargestellt. Das Steuergerät kann mit einem Motorsteuergerät zusammengefaßt sein oder als eigenes Steuergerät ausgebildet sein.

Die Ansteuerung der Klappen 42 erfolgt vorteilhafterweise derart, daß in bestimmten Lastzuständen des Motors, beispielsweise bei niedrigen Drehzahlen die Klappen 42 am Ende eines Ansaughubs bereits schließen, bevor das Einlaßventil schließt. Damit kann eine Rückströmung der Frischladung durch das Schwingrohr 16 zuverlässig verhindert werden.

Das Saugrohr gemäß Fig. 2 kann derart ausgebildet sein, daß der freie Abströmquerschnitt (linkes Ende gemäß Fig. 2) größer ist als der freie Einströmquerschnitt (rechtes Ende gemäß Fig. 2).

Fig. 3 zeigt funktionswesentliche Teile der Fig. 2 bei einer etwas abgeänderten Ausführungsform, bei der der Steg 50 gegenüber den Lagerzapfen 40 nicht in Richtung des Einlaßventils versetzt ist.

Bei der Ausführungsform gemäß Fig. 3 sind die Klappen 42 als einfache dünne Blechteile beispielsweise aus Weicheisen bzw. magnetisch gut leitendem Material gefertigt, und zur ihrer Lagerung direkt um die Lagerzapfen 40 herum gebogen.

Die um die Durchströmöffnungen 56 und 58 des Schwingrohrs 16 (Fig. 2) herumlaufenden und die Durchströmöffnungen definierenden Rahmenteile 46 und 48 sind im Querschnitt U-förmig mit jeweils einen inneren umlaufenden Schenkel 60 bzw. 62 und einem äußeren umlaufenden Schenkel 64 bzw. 66. In dem Zwischenraum zwischen den Schenkeln ist jeweils die Magnetspule 52 bzw. 54 angeordnet.

Wie ersichtlich, ist der äußere Schenkel 64 bzw. 66 etwas kürzer als der innere Schenkel 60 bzw. 62, so daß bei in dichtender Anlage an den Rahmenteilen 46 bzw. 48 befindlichen Klappen 42 ein umlaufender Luftspalt 68 bzw. 70 verbleibt. Der Luftspalt 68 bzw. 70 ist in doppelter Hinsicht von Vorteil. Zum einen verkürzt er die sogenannte Klebzeit, die vom Abschalten des Stroms durch die Spulen 52 bzw. 54 bis zum Freigeben der Klappen 42 durch das Absenken der magnetischen Haltekraft vergeht. Die Präzision, mit der die Öffnung der Klappen gesteuert werden kann, ist somit verbessert. Zum zweiten kommt den Luftspalten beim Schließen der Klappen eine gewisse Dämpfungsfunktion zu, da vor dem Auftreffen der Klappen auf die Polflächen bzw. Stirnflächen der inneren Schenkel 60 bzw. 62 Luft aus dem Raum über den Spulen durch den Spaltraum hindurch verdrängt werden muß.

Ein weiterer Vorteil der ungleich langen Ausbildung der Schenkel liegt darin, daß die dichtende Anlage zwischen den in sich verformbaren, aus dünnem Blech bestehenden Klappen und den Polflächen der inneren Schenkel 60 bzw. 62 verbessert ist.

In Fig. 3 ist die obere Klappe 42 gestrichelt in der Stellung eingezeichnet, die sie kurz vor dem Erreichen der vollen Öffnungsstellung hat, in der die untere Klappe 42 gestrichelt eingezeichnet ist. Wie anhand der oberen Klappe 42 ersichtlich, muß die Klappe 42, bevor sie in Anlage an den Öffnungsmagneten gelangt, Luft aus dem zwischen ihr und dem Magnetkern 36 bestehenden Spaltraum 72 verdrängen, wodurch der Anschlag der Klappe 42 an dem Öffnungsmagneten gedämpft wird.

Fig. 4 zeigt schematisch eine Ansicht von links auf die Anordnung der Fig. 3 bei abgenommenen Klappen 42, wobei an das dargestellte Bauteil 80, das sich beispielsweise längs einer Zylinderreihe erstreckt, mehrere Saugrohre anschließbar sind. In der Ansicht der Fig. 1 könnte die dort mit 26 bezeichnete Vorrichtung die eine Seitenansicht des Bauteils 80 sein, das in die Schwingrohre 16 eingefügt ist.

Deutlich sichtbar sind die Durchströmöffnungen 56 und 58 jedes Schwingrohrs, um die herum die Rahmenteile 46 und 48 umlaufen, deren einander zugewandte Schenkel zu den Stegen 50 zusammengefaßt sind. Jeweils oberhalb und unterhalb der Rahmenteile ist ein Lagerzapfen 40 angedeutet, an dem jeweils eine Klappe 42 (in Fig. 4 nicht dargestellt) gelagert ist.

Die Anordnung ist vorteilhafterweise insgesamt derart, daß bezogen auf die Gesamtlänge der Schwingrohre 16 (Fig. 1), d.h. den Abstand zwischen dem Einlaßventil und der Mündung des Schwingrohrs in den Luftsammler, der Abstand zwischen den Klappen und dem Einlaßventil im Bereich zwischen 15 und 40% der Gesamtlänge liegt. Die einlaßventilseitigen Enden der Klappen (linke Enden gemäß Fig. 2) befinden sich vorteilhafterweise deutlich vor der engsten Stelle der Verengung 48, um sicherzustellen, daß im geöffneten Zustand der Klappen keine Strömungsstörungen auftreten.

Es versteht sich, daß die geschilderte Anordnung in vielfältiger Weise abgeändert werden kann. Die Ausbildung des Saugrohrs mit der lavaldüsenartigen Verengung ist nicht zwingend. Anstelle von zwei Klappen kann auch mit einer Klappe oder kann mit mehreren, in Umfangsrichtung verteilten Klappen, gearbeitet werden usw.. Es können auch andere Ausgangssysteme als das der Fig. 1 verwendet werden, wobei das System der Fig. 1 besonders einfach ist.

Mit der Erfindung werden zahlreiche Vorteile erzielt:

Durch die schlagartige Öffnung der Klappen 42 wird sehr plötzlich der volle Strömungsquerschnitt des Schwingrohrs bzw. Einlaßkanal freigegeben, wodurch infolge des Unterdrucks die Einströmung mit hohem Impuls sehr wirksam erfolgt. Die erreichte Aufladung bzw. Zylinderfüllung ist unabhängig von der Drehzahl des Motors, d.h. steht spontan auch bei sehr geringen Drehzahlen zur Verfügung. Der Zeitpunkt, zu dem sich die Klappen 42 öffnen, kann in Anpassung an die jeweiligen geometrischen Verhältnisse, die Drehzahl usw. derart gewählt werden, daß eine maximale Zylinderfüllung erzielt wird.

Dadurch, daß die Klappen unmittelbar die Magnetanker bilden und der bzw. die Strömungsquerschnitte durch die Portalmagnete gebildet sind, sind nur geringe elektrische Leistungen erforderlich, um die Klappen zuverlässig und in dichtender Anlage zu halten.

Die Öffnungsspulen 38 mit den zugehörigen Magnetkernen 36 sind vorteilhafterweise derart ausgebildet, daß ihre Magnetfelder in das Innere des Schwingrohrs 16 hineinreichen, so daß die sich öffnenden Klappen, die auch für diese Magneten einen Magnetanker bilden, zuverlässig gefangen bzw. in Öffnungsstellung gehalten werden.

Die Energie der zu steuernden Einlaßströmung wird unmittelbar auch zur Öffnung der Klappen verwendet, so daß keine weitere Fremdenergie erforderlich ist und die Öffnung sehr rasch erfolgt. Die zum Schließen erforderliche Energie wird beim Öffnen der Einlaßströmung entnommen und in den Schließfedern gespeichert. Der Aufschlag der Klappen auf die Polflächen der Magneten kann unter Nutzung der kompressiblen Eigenschaften der einströmenden Luft gedämpft werden, was Geräusche vermindert und die Dauerhaltbarkeit verbessert.

An die Lagerung der Klappen sind keine hohen Anforderungen gestellt; im Gegenteil kann diese Lagerung verhältnismäßig weich oder mit Spiel erfolgen, damit keine geometrische Überbestimmung vorhanden ist und sich die Klappen bei ihrer Anlage an die Polflächen der Magnete ggf. nur wenig verformen.

Die Erfindung wurde anhand eines besonders vorteilhaften Beispiels beschrieben. Die Klappen könnten auch pneumatisch, elektrisch, hydraulisch oder sonstwie betätigt werden und in anderer Weise und aus anderen Werkstoffen ausgebildet sein.

Die Erfindung kann für alle Arten von Motoren eingesetzt werden, unabhängig davon, ob mehrere Einlaß- und Auslaßventile je Zylinder vorgesehen sind, ob es sich um Otto- oder Diesel-Motoren, um Saug- oder aufgeladene Motoren um Ein- oder Mehrzylinder-Motoren usw handelt.

## Patentansprüche

1. Vorrichtung zur Impulsaufladung einer Kolbenbrennkraftmaschine mit wenigstens einem Zylinder (2), in dem ein Kolben (4) arbeitet und in den ein Ladungswechselkanal (16) mündet, wobei in der Mündung ein Ladungswechselventil (20) arbeitet, welche Vorrichtung wenigstens ein in dem Ladungswechselkanal strömungsoberhalb des Ladungswechselventils beweglich angeordnetes Bauteil enthält, das elastisch in Richtung einer Schließlage vorgespannt ist, in der es den Strömungsquerschnitt des Ladungswechselkanals verschließt, und das einen Magnetanker bildet, der in Schließstellung an einer dem Ladungswechselventil zugewandten Polfläche eines Elektromagneten (46, 52; 48; 54) anliegt, wobei die Anordnung derart ist, dass das bewegliche Bauteil sich bei abgeschalteten Elektromagneten und Unterdruck im zylinderseitigen Bereich des Ladungswechselkanals (16) durch den an ihm wirksamen Unterdruck und die mit zunehmender Öffnung einsetzenden Zylindereinströmung in Öffnungsrichtung bewegt,
**dadurch gekennzeichnet, dass**
der Elektromagnet (46, 52; 48, 54) als einen Strömungsquerschnitt des Ladungswechselkanals (16) bildender Portalmagnet mit ringartiger Polfläche und das bewegliche Bauteil als eine Klappe (42) aus Weicheisen gebildet ist, die sich in Schließstellung dichtend an der umlaufenden Polfläche anlegt.

2. Vorrichtung nach Anpsruch 1, **dadurch gekennzeichnet, dass** die Klappe (42) als in sich nachgiebiges Blechteil ausgebildet ist.

3. Vorrichtung nach Anspruch 1 oder 2, **dadurch gekennzeichnet, daß** die Klappe (42) an einem in einer Ausnehmung (34) an der Innenseite des Ladungswechselkanals (16) angeordneten Lagerzapfen (40) gelagert ist.

4. Vorrichtung nach einem der Ansprüche 1 bis 3, **dadurch gekennzeichnet, daß** die Klappe (42) in Öffnungsstellung von einem in die Wandung des Ladungswechselkanals (16) integrierten Fangmagneten (36, 38) gehalten ist.

5. Vorrichtung nach einem der Ansprüche 1 bis 4, **dadurch gekennzeichnet, daß** wenigstens zwei, an der Wandung des Ladungswechselkanals (16) angelenkte Klappen (42) vorgesehen sind, die mit zwei Portalmagneten (46, 52; 48, 54) zusammenwirken, deren innere Schenkel an einem den Ladungswechselkanal (16) durchquerenden Steg (50) ausgebildet sind.

6. Vorrichtung nach Anspruch 5, **dadurch gekennzeichnet, daß** der Steg (50) mit stromlinienartigem Profil ausgebildet ist.

7. Vorrichtung nach Anspruch 5 oder 6, **dadurch gekennzeichnet, daß** der Ladungswechselkanal (16) mit einer lavaldüsenartigen Verengung (28) ausgebildet ist und die Klappen (42) am stromaufwärtigen Beginn der Verengung an dem Ladungswechselkanal angebracht sind, so daß sie in Öffnungsstellung einen Teil des sich verengenden Bereiches (30) des Ladungswechselkanals bilden.

8. Vorrichtung nach einem der Ansprüche 1 bis 7, **dadurch gekennzeichnet, daß** die Klappe (42) bezogen auf ihre Drehachse in radialer Richtung kleiner ist als in axialer Richtung.

9. Vorrichtung nach einem der Ansprüche 1 bis 8, **dadurch gekennzeichnet, daß** die Polflächen der Elektromagnete und die zugehörigen Anlageflächen der Klappe derart ausgebildet sind, daß eine Anschlagdämpfung gebildet ist.

10. Vorrichtung nach einem der Ansprüche 1 bis 9, **dadurch gekennzeichnet, daß** der Ladungswechselkanal ein Schwingrohr (16) eines Einlaßsystems der Kolbenbrennkraftmaschine ist.

## Claims

1. Apparatus for impulse charging of an internal combustion engine having at least one cylinder (2), in which a piston (4) operates, which cylinder communicates with a charge changing duct (16), and in the port of which a charge changing valve (20) operates, which apparatus includes at least one movably arranged component in the charge changing duct upstream of the charge changing valve, which at least one movably arranged component is resiliently biased in the direction of a closing position, at which position the component closes the flow cross-section of the charge changing duct, the at least one movably arranged component forming a magnetic armature that contacts a pole surface of an electromagnet (46, 52, 48, 54) in the closing position, the pole surface facing the charge changing valve, wherein the arrangement is such that, in the state of the electromagnet being de-energized and a vacuum in the cylinder-side area of the charge changing duct (16), the movable component is moved in an opening direction by the vacuum working on it and with the increased opening initial cylinder inflow,
**characterized in that**:
the electromagnet (46, 52, 48, 54) is formed as a portal magnet having an annular pole surface, the portal magnet forming a flow cross-section of the charge changing duct (16), and the movable component is formed as a flap (42) made of soft iron, which sealingly contacts the peripheral pole surface in the closing position.

2. Apparatus according to claim 1, **characterized in that** the flap (42) is formed as a deformable metal plate.

3. Apparatus according to claim 1 or 2, **characterized in that** the flap (42) is disposed on a bearing journal (40) arranged in a recess (34) on the inner side of the charge changing duct (16).

4. Apparatus according to one of the claims 1 to 3, **characterized in that** the flap (42) is held in the opening position by a capture magnet (36, 38) integrated in the peripheral wall of the charge changing duct (16).

5. Apparatus according to one of the claims 1 to 4, **characterized in that** at least two flaps (42) are coupled to the peripheral wall of the charge changing duct (16), the flaps working together with the two portal magnets (46, 52, 48, 54), inner legs of which are formed on an element (50) traversing the charge changing duct (16).

6. Apparatus according to claim 5, **characterized in that** the element (50) is formed with a streamlined profile.

7. Apparatus according to claim 5 or 6, **characterized in that** the charge changing duct (16) is formed with a Laval nozzle throat (28) and the flaps (42) are mounted on the charge changing duct at the upstream flow end of the throat, so that the flaps form a part of the throat area (30) of the charge changing duct in the opening position.

8. Apparatus according to one of the claims 1 to 7, **characterized in that** the rotational axis of the flap (42) is smaller in the radial direction than in the axial direction.

9. Apparatus according to one of the claims 1 to 8, **characterized in that** the pole surfaces of the electromagnets and the corresponding contact surfaces of the flap are formed so that an abutment dampener is formed.

10. Apparatus according to one of the claims 1 to 9, **characterized in that** the charge changing duct is an oscillation duct (16) of an intake system of the internal combustion engine.

## Revendications

1. Dispositif de suralimentation par impulsion d'un moteur à combustion interne à piston avec au moins un cylindre (2) dans lequel coulisse un piston (4) et dans lequel débouche un canal (16) d'alternance de suralimentation, une soupape d'alternance de suralimentation (20) fonctionnant à l'embouchure, ce dispositif comprenant au moins un composant, disposé de manière mobile dans le canal d'alternance de suralimentation en amont de la soupape d'alternance de suralimentation, le composant étant élastiquement précontraint en direction d'une position de fermeture dans laquelle il obture la section d'écoulement du canal d'alternance de suralimentation, et qui constitue une armature magnétique qui s'appuie en position de fermeture contre une face polaire d'un électro-aimant (46, 52; 48; 54) orientée vers la soupape d'alternance de suralimentation, l'agencement étant tel que le composant mobile se déplace dans la direction d'ouverture, lorsque l'électro-aimant est désexcité et qu'une dépression apparaît dans la zone du côté du cylindre du canal d'alternance de suralimentation (16), du fait de la dépression agissant sur lui et du fait de l'écoulement d'admission du cylindre qui augmente avec une ouverture croissante **caractérisé en ce que**
l'électro-aimant (46, 52; 48, 54) est conçu comme un aimant en forme de portique avec une face polaire annulaire et constituant une section d'écoulement du canal d'alternance de suralimentation (16) et le composant mobile est conçu comme un clapet (42) en fer doux qui s'appuie, dans la position de fermeture, de manière étanche contre la surface polaire périphérique.

2. Dispositif selon la revendication 1, **caractérisé en ce que** le clapet (42) est conçu comme une pièce de tôle flexible.

3. Dispositif selon la revendication 1 ou 2, **caractérisé en ce que** le clapet (42) est monté mobile sur un axe de palier (40) disposé dans un évidement (34) sur la face intérieure du canal d'alternance de suralimentation (16).

4. Dispositif selon l'une des revendications 1 à 3, **caractérisé en ce que** le clapet (42) est maintenu, dans la position d'ouverture, par un aimant de retenue (36, 38) intégré dans la paroi du canal d'alternance de suralimentation (16).

5. Dispositif selon l'une des revendications 1 à 4, **caractérisé en ce qu'**au moins deux clapets (42) sont prévus sur la paroi du canal d'alternance de suralimentation (16), qui coopèrent avec deux aimants en forme de portique (46, 52; 48, 54) dont les montants internes sont réalisés sur une barrette (50) qui traverse le canal d'alternance de suralimentation (16).

6. Dispositif selon la revendication 5, **caractérisé en ce que** la barrette (50) est réalisée avec un profil à lignes d'écoulement (aérodynamique).

7. Dispositif selon la revendication 5 ou 6, **caractérisé en ce que** le canal (16) d'alternance de suralimentation est conçu avec un rétrécissement (28) en forme de tuyère de Laval et les clapets (42) sont disposés au début en amont du rétrécissement dans le canal d'alternance de suralimentation, de telle sorte qu'ils constituent, dans la position d'ouverture, une partie de la zone (30) rétrécie du canal d'alternance de suralimentation.

8. Dispositif selon l'une des revendications 1 à 7, **caractérisé en ce que** le clapet (42) est plus petit, par rapport à son axe de rotation, dans la direction radiale que dans la direction axiale.

9. Dispositif selon l'une des revendications 1 à 8, **caractérisé en ce que** les surfaces polaires des électro-aimants et les surfaces d'appui correspondantes du clapet sont conçues de telle sorte qu'un amortissement de butée soit obtenu.

10. Dispositif selon l'une des revendications 1 à 9, **caractérisé en ce que** le canal d'alternance de suralimentation est un tube d'oscillation (16) d'un système d'admission du moteur à combustion interne à piston.
